# FASCICULE DE BREVET EUROPEEN

(11) **EP 2 162 846 B1**
(45) Date de publication et mention de la délivrance du brevet: **18.04.2018**
(21) Numéro de dépôt: 08805806.0
(22) Date de dépôt: 19.05.2008
(51) Int. Cl.: G06F 21/75

(54) **CRYPTOPROCESSEUR A PROTECTION DE DONNEES AMELIOREE**
KRYPTOPROZESSOR MIT VERBESSERTEM DATENSCHUTZ
CRYPTOPROCESSOR WITH IMPROVED DATA PROTECTION

(30) Priorité: 21.05.2007 FR 0755148
(43) Date de publication de la demande: 17.03.2010
(73) Titulaire: Ingenico Group, 75015 Paris (FR)
(72) Inventeur: COUSSIEU, Alain, F-75015 Paris (FR); ECK, Alain, F-75015 Paris (FR)
(74) Mandataire: Thibon, Laurent
(86) Numéro de dépôt international: PCT/FR2008/050860
(87) Numéro de publication internationale: WO 2008/142356

(56) Documents cités:
- EP-A- 0 417 447
- WO-A-99/40501
- GB-A- 2 195 478

## Description

### Domaine de l'invention

La présente invention s'applique à un circuit électronique comprenant une mémoire vive dans laquelle sont stockées des données et adapté à effacer les données lors de la détection d'une tentative d'accès non autorisé.

### Exposé de l'art antérieur

De nombreux systèmes électroniques comprennent une mémoire vive dans laquelle sont stockées des données dites sensibles nécessaires au bon fonctionnement du système électronique et qui ne doivent pas être accessibles à un utilisateur non autorisé. A titre d'exemple, un lecteur de cartes, par exemple de cartes bancaires, comprend généralement un circuit électronique, appelé cryptoprocesseur, dédié au stockage des données sensibles et à la réalisation d'opérations arithmétiques sur les données sensibles. Les données sensibles correspondent par exemple aux codes confidentiels des cartes introduites dans le lecteur ou à des clés utilisées par le cryptoprocesseur pour la mise en oeuvre d'algorithmes de cryptage. Le cryptoprocesseur est adapté à effacer l'ensemble des données sensibles dès qu'une tentative d'accès non autorisé au lecteur est détectée par des dispositifs de sécurité équipant le lecteur de façon à empêcher qu'un individu ne puisse lire les données sensibles stockées dans le cryptoprocesseur.

Les composants du lecteur, dont le cryptoprocesseur, sont généralement alimentés à partir d'une unique source d'alimentation, par exemple l'alimentation du secteur, appelée par la suite alimentation principale. Une source d'alimentation de secours est généralement prévue au niveau du lecteur pour alimenter le cryptoprocesseur même si l'alimentation principale est interrompue afin de permettre la conservation des données, le fonctionnement des dispositifs de sécurité et l'effacement des données sensibles en cas de détection d'une tentative d'accès non autorisé. La source d'alimentation de secours est par exemple constituée d'une pile connectée au cryptoprocesseur et fournissant une tension d'alimentation de secours.

Notamment en raison de la disposition et de la taille de la source d'alimentation de secours et des exigences de sécurité actuelles dans le domaine des lecteurs de cartes bancaires, la protection de la source d'alimentation de secours nécessite des dispositifs mécaniques coûteux (par exemple capot avec détection d'ouverture) et il n'est généralement pas possible d'exclure complètement le risque qu'un individu parvienne à accéder à la source d'alimentation de secours sans que cette intrusion ne soit détectée par le cryptoprocesseur. Selon une première possibilité, on pourrait envisager une désactivation de la source d'alimentation de secours, ce qui se traduirait par un arrêt du fonctionnement du cryptoprocesseur sans que l'effacement des données sensibles stockées dans la mémoire vive du cryptoprocesseur n'ait pu être réalisé. Bien que l'interruption de l'alimentation d'une mémoire vive entraîne théoriquement la perte des données qui y sont stockées, il existe un risque que des données puissent être récupérées en raison de phénomènes de rémanence propres à certains types de mémoires vives classiquement utilisées dans les lecteurs. Selon une seconde possibilité encore moins favorable, il serait envisageable, en faisant varier la tension d'alimentation de secours, de perturber le fonctionnement du cryptoprocesseur de sorte qu'un accès au cryptoprocesseur soit possible sans entraîner l'effacement des données sensibles dans la mémoire vive qui reste alors alimentée. Les données sensibles pourraient alors être lues par une personne non autorisée.

Le document GB2195478 décrit un système électronique comprenant une mémoire principale, une mémoire secondaire, et un détecteur d'intrusion. La mémoire secondaire est effacée à la détection d'une intrusion. Le système électronique est alimenté par une source d'alimentation externe.

Le document WO 99/40501 décrit un système électronique comprenant une seule mémoire reliée à une source d'alimentation principale et un détecteur d'intrusion. La mémoire secondaire est reliée à une autre source d'alimentation à la détection d'une intrusion pour être effacée.

### Résumé de l'invention

La présente invention vise un circuit électronique comprenant une mémoire vive dans laquelle sont stockées des données sensibles qui est adapté à empêcher l'accès aux données sensibles dans le cas d'une variation de la tension d'alimentation du circuit électronique.

Ainsi, un mode de réalisation de la présente invention prévoit un circuit électronique réalisé de façon intégré comprenant une première mémoire vive de stockage de données ; un module de traitement adapté à réaliser une opération d'effacement de la première mémoire vive ; et une borne d'accès reliée au module de traitement et destinée à recevoir un premier signal d'alimentation fourni par une première source d'alimentation externe au circuit électronique. Le circuit comprend, en outre, une seconde mémoire vive dans laquelle est stockée une clé, lesdites données étant cryptées en mettant en oeuvre ladite clé ; et une seconde source d'alimentation intégrée au circuit électronique et adaptée à fournir un second signal d'alimentation au module de traitement, le module de traitement étant adapté à détecter qu'une tentative d'accès non autorisé a lieu à partir de la comparaison des premier et second signaux d'alimentation et à effacer ladite clé tandis que le module de traitement est alimenté par la seconde source d'alimentation.

Selon un mode de réalisation, la seconde source d'alimentation comprend un élément capacitif relié à la borne d'accès et au module de traitement, le circuit électronique comprenant, en outre, un dispositif adapté à empêcher une décharge rapide de l'élément capacitif par une action extérieure sur la borne d'accès.

Selon un mode de réalisation, le module de traitement comprend des transistors MOS et l'élément capacitif correspond aux capacités parasites des transistors MOS.

Selon un mode de réalisation, la capacité de stockage de la seconde mémoire vive est inférieure à la capacité de stockage de la première mémoire vive.

Selon un mode de réalisation, la capacité de stockage de la seconde mémoire vive est inférieure à mille bits.

Selon un mode de réalisation, le circuit comprend une borne d'accès supplémentaire destinée à être reliée à une troisième source d'alimentation, externe au circuit électronique, assurant l'alimentation du module de traitement dans un mode de fonctionnement normal du circuit électronique, la première source d'alimentation assurant l'alimentation du module de traitement lorsque la troisième source d'alimentation est inactive.

Selon un mode de réalisation, la première source d'alimentation comprend une pile connectée à la borne d'accès et un condensateur monté en parallèle aux bornes de la pile.

Il est également prévu un système, notamment un lecteur de carte, comprenant un boîtier contenant une source d'alimentation et un circuit électronique tel que défini précédemment relié à la source d'alimentation.

Il est également prévu un procédé de protection de données stockées dans une première mémoire vive d'un circuit électronique, le circuit électronique comprenant, en outre, un module de traitement adapté à réaliser une opération d'effacement de la première mémoire vive et une borne d'accès reliée au module de traitement et destinée à recevoir un premier signal d'alimentation fourni par une première source d'alimentation, externe au circuit électronique. Le procédé consiste à prévoir une seconde mémoire vive au niveau du circuit électronique dans laquelle est stockée une clé, lesdites données étant obtenues par un cryptage mettant en oeuvre ladite clé et une seconde source d'alimentation intégrée au circuit électronique et adaptée à fournir un second signal d'alimentation au module de traitement. Le procédé consiste, en outre, à amener le module de traitement à détecter qu'une tentative d'accès non autorisé a lieu à partir de la comparaison des premier et second signaux d'alimentation et à effacer ladite clé, le module de traitement étant alors alimenté par la seconde source d'alimentation.

Selon un mode de réalisation, le premier signal d'alimentation correspond à une première tension et le second signal d'alimentation correspond à une seconde tension, une tentative d'accès non autorisé étant détectée lorsque la différence entre les seconde et première tensions est supérieure à un seuil donné pendant une durée donnée.

### Brève description des dessins

Ces objets, caractéristiques et avantages, ainsi que d'autres seront exposés en détail dans la description suivante d'un exemple de réalisation particulier faite à titre non-limitatif en relation avec les figures jointes parmi lesquelles :
la figure 1 représente un exemple classique de cryptoprocesseur d'un lecteur de cartes ; et
la figure 2 représente un exemple de réalisation d'un cryptoprocesseur de lecteur de cartes selon l'invention.

### Description détaillée

Par souci de clarté, de mêmes éléments ont été désignés par de mêmes références aux différentes figures.

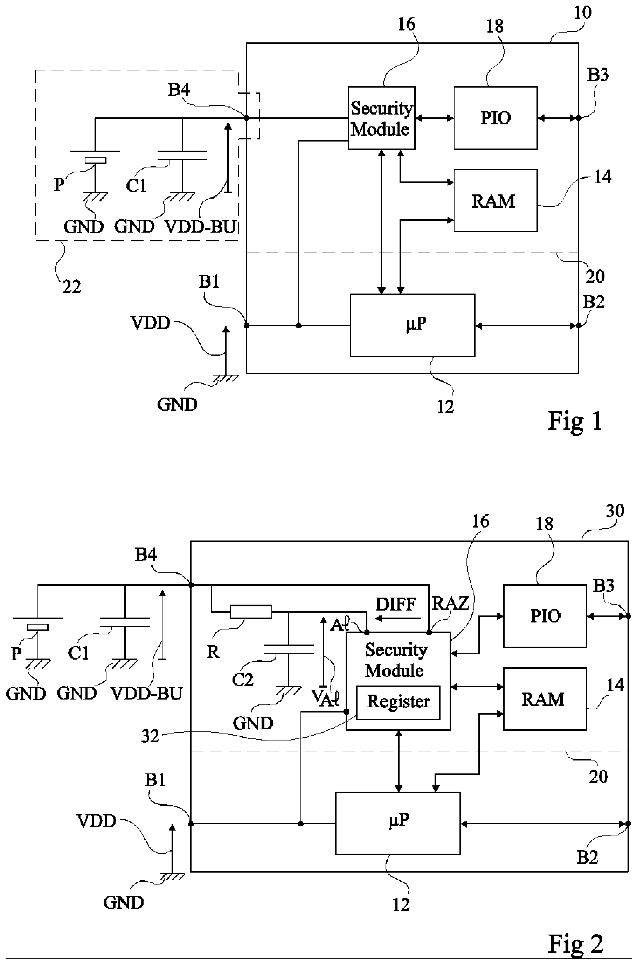

Un exemple classique de cryptoprocesseur va maintenant être décrit en relation avec la figure 1. A titre d'exemple, on considère un cryptoprocesseur équipant un lecteur de cartes, par exemple de cartes bancaires. Toutefois, la présente invention peut s'appliquer à tout type de cryptoprocesseurs.

Le cryptoprocesseur 10 correspond à un circuit intégré comprenant une borne d'alimentation B1 à laquelle est appliquée une tension d'alimentation principale VDD fournie, par exemple, à partir de l'alimentation du secteur. A titre d'exemple, la tension d'alimentation principale VDD est de l'ordre de 2 volts. Le cryptoprocesseur 10 comprend un microprocesseur 12 (µP) qui réalise, en fonctionnement normal, les opérations classiques propres au cryptoprocesseur 10. Pour ce faire, le cryptoprocesseur 10 comprend une ou plusieurs bornes d'accès (une seule borne B2 étant représentée en figure 1) par l'intermédiaire desquelles le microprocesseur 12 échange des données avec d'autres composants du lecteur. Le cryptoprocesseur 10 comprend, en outre, une mémoire vive 14 (RAM) dans laquelle le microprocesseur 12 est adapté à lire et à écrire des données, notamment des données dites sensibles. La taille de la mémoire 14 dépend de la quantité de données traitées par le cryptoprocesseur 10 et est, de façon classique, de l'ordre de quelques kilo-octets, par exemple 8 kilo-octets.

Le cryptoprocesseur 10 comprend en outre un module de sécurité 16 (Security Module) ou automate. Le module de sécurité 16 est un circuit logique qui a une structure plus simple que la structure du microprocesseur 12 et qui peut comprendre quelques milliers à quelques dizaines de milliers de portes logiques. Le module de sécurité 16 peut échanger des données avec le microprocesseur 12 et au moins réaliser des opérations d'écriture dans la mémoire 14. Le module de sécurité 16 peut, en outre, échanger des données avec d'autres composants du lecteur par l'intermédiaire de bornes d'accès (une seule borne B3 étant représentée en figure 1). Un module d'interface entrée/sortie 18 (PIO) est généralement prévu entre le module de sécurité 16 et la borne d'accès B3. A titre d'exemple, le module de sécurité 16 peut recevoir par la borne d'accès B3 des signaux transmis par des dispositifs de sécurité équipant le lecteur. Un exemple de dispositif de sécurité correspond à un circuit de type treillis comprenant une piste conductrice dont l'interruption, représentative d'une tentative d'accès non autorisé au lecteur, entraîne la fourniture d'un signal d'alarme au cryptoprocesseur 10. Un autre exemple de dispositif de sécurité correspond à une touche de clavier factice assurant en permanence un contact électrique entre deux pistes conductrices en fonctionnement normal, une interruption du contact étant représentative d'une tentative d'accès non autorisé et entraînant la fourniture d'un signal d'alarme au cryptoprocesseur 10. Un autre dispositif de sécurité correspond à un capteur de température, une température excessive étant représentative d'un malfonctionnement ou d'une tentative d'accès non autorisé et entraînant la fourniture d'un signal d'alarme au cryptoprocesseur 10. Le module de sécurité 16 peut décider qu'une tentative d'accès non autorisé a lieu à la réception d'un signal d'alarme à la borne B3, à la détection d'une variation de la tension d'alimentation principale VDD, à la détection d'un mauvais fonctionnement du microprocesseur 12, etc. Lorsque le module de sécurité 16 détecte une tentative d'accès non autorisé, il commande l'effacement des données stockées dans la mémoire 14. Le cryptoprocesseur 10 comprend un module, non représenté, de fourniture d'un signal d'horloge qui cadence les éléments du cryptoprocesseur 10, notamment le module de sécurité 16.

En fonctionnement normal, le module de sécurité 16 est alimenté par la tension d'alimentation principale VDD. Lorsque la tension d'alimentation principale VDD n'est pas présente, le module de sécurité 16 est alimenté par une source d'alimentation de secours fournissant une tension d'alimentation de secours VDD_BU à une borne B4 du cryptoprocesseur 10. Dans le présent exemple de réalisation, la source d'alimentation de secours comprend une pile P dont une borne est connectée à la borne B4 et dont l'autre borne est connectée à une source d'un potentiel de référence, par exemple la masse GND du lecteur. En outre, un condensateur C1 est monté en parallèle aux bornes de la pile P. On a disposé en dessous d'une ligne en traits pointillés 20 les éléments du cryptoprocesseur 10 qui ne fonctionnent pas lorsque la tension d'alimentation principale VDD n'est pas présente et, au-dessus de la ligne 20, les éléments du cryptoprocesseur 10 qui, lorsque la tension d'alimentation principale VDD n'est pas présente, continuent à fonctionner en étant alimentés par la tension d'alimentation de secours VDD_BU, éventuellement dans un mode de fonctionnement différent du mode de fonctionnement normal. En particulier, le module de fourniture du signal d'horloge fonctionne en permanence. Lorsque la tension d'alimentation principale VDD n'est pas présente, le module de sécurité 16, alimenté par la pile P, continue à fonctionner et peut donc effacer les données stockées dans la mémoire 14 lorsqu'une tentative d'accès non autorisé est détectée. Dans le cas où la pile P serait désactivée, le module de sécurité 16 reste alimenté un certain temps par le condensateur C1. La diminution de la tension aux bornes du condensateur C1 est détectée par le module de sécurité 16 qui réagit, comme pour la détection d'une tentative d'accès non autorisé, par l'effacement des données sensibles stockées dans la mémoire 14. La capacité du condensateur C1, qui correspond généralement à un composant discret, est suffisante pour permettre la réalisation de l'opération d'effacement de la mémoire 14 par le module de sécurité 16.

Le lecteur comprend généralement un boîtier formé d'une portion supérieure de boîtier (au niveau de laquelle se trouvent l'écran d'affichage et le clavier du lecteur) et d'une portion inférieure de boîtier. Le boîtier contient une carte mère, les composants électroniques du lecteur étant connectés sur l'une ou l'autre des faces de la carte mère. En particulier, le cryptoprocesseur 10 et le condensateur C1 sont généralement connectés sur la face de la carte mère orientée vers la portion supérieure de boîtier ou face supérieure. Pour des raisons d'encombrement, la pile P est généralement connectée sur la face de la carte mère orientée vers la portion inférieure de boîtier ou face inférieure. Même si des dispositifs de sécurité peuvent être prévus sur les deux faces de la carte mère, on considère généralement que le niveau de sécurité des composants connectés sur la face inférieure de la carte mère est moins élevé que celui des composants connectés sur la face supérieure de la carte mère dans la mesure où une intrusion réalisée du côté de la portion supérieure de boîtier est généralement visible lors d'une manipulation habituelle du boîtier.

Il existe donc un risque qu'un individu puisse accéder à la pile P sans qu'une tentative d'accès non autorisé ne soit détectée. Il serait alors théoriquement possible de modifier la valeur de la tension d'alimentation de secours VDD_BU alors que la tension d'alimentation principale VDD n'est pas présente. Ceci pourrait perturber le fonctionnement du module de sécurité 16 qui ne serait alors plus en mesure de détecter une tentative d'accès non autorisé et d'effacer en conséquence les données sensibles stockées dans la mémoire 14. Un accès à ces données serait alors possible.

En outre, bien que le condensateur C1 est généralement disposé sur la face supérieure de la carte mère qui présente un niveau de sécurité plus élevé que la face inférieure, il s'agit d'un composant discret distinct du cryptoprocesseur 10. Il existe donc toujours un risque qu'un utilisateur parvienne à accéder au condensateur C1 sans qu'une tentative d'accès non autorisé ne soit détectée. Une déconnexion du condensateur C1, et de la pile P, entraîne alors la chute quasi-instantanée de la tension d'alimentation de secours VDD_BU et donc, lorsque la tension d'alimentation principale VDD n'est pas présente, un arrêt du fonctionnement du module de sécurité 16 sans qu'une opération d'effacement des données sensibles stockées dans la mémoire 14 n'ait pu être réalisée. Bien que l'interruption de l'alimentation de la mémoire vive 14 entraîne théoriquement une perte des données qui y sont stockées, il existe un risque, du fait de phénomènes de rémanence de certains types de mémoire vive, que les données sensibles, ou une partie d'entre elles, puissent être récupérées. La ligne 22 en pointillés délimite les éléments du lecteur 10, plus précisément la pile P, le condensateur C1 et la liaison électrique entre la pile P, le condensateur C1 et la borne d'accès B4, qui nécessitent une protection particulière pour assurer le bon fonctionnement du cryptoprocesseur 10.

La figure 2 représente un exemple de réalisation d'un cryptoprocesseur 30 selon l'invention qui permet d'empêcher l'accès aux données sensibles lors de variations de la tension d'alimentation de secours VDD_BU. Les éléments communs avec le cryptoprocesseur 10 de la figure 1 sont désignés par les mêmes références. Le cryptoprocesseur 30 comprend l'ensemble des éléments du cryptoprocesseur 10 et comprend, en outre, un condensateur supplémentaire C2 dont une borne est reliée à une source d'un potentiel de référence, par exemple la masse GND du lecteur, et dont l'autre borne est reliée d'une part à une borne Al du module de sécurité 16 et d'autre part à la borne B4 par l'intermédiaire d'un dispositif R (par exemple une résistance, une diode ou autre) interdisant une décharge rapide du condensateur C2 par une action extérieure sur la borne B4. La borne B4 est en outre directement reliée à une borne RAZ du module de sécurité 16. On appelle DIFF la tension entre les bornes Al et RAZ et V_{Al} la tension aux bornes du condensateur C2. Le module de sécurité 16 comprend une mémoire vive supplémentaire 32 (Register) de capacité réduite par rapport à la mémoire vive 14 et pour laquelle les opérations d'écriture et de lecture peuvent être réalisées par le module de traitement 16 sur un faible nombre de cycles d'horloge et à faible coût énergétique. Il s'agit par exemple d'un registre de quelques centaines de bits, par exemple de 256 bits.

Dans le présent exemple de réalisation, les données sensibles sont stockées dans la mémoire 14 sous une forme cryptée, le procédé de cryptage utilisé mettant en oeuvre au moins une clé, appelée clé primaire. La clé primaire est stockée dans la mémoire supplémentaire 32 du module de sécurité 16. En fonctionnement normal, lorsque le microprocesseur 12 souhaite utiliser une donnée sensible stockée dans la mémoire 14, il lit également la clé primaire stockée dans la mémoire supplémentaire 32 pour décrypter la donnée sensible stockée dans la mémoire 14. Lors de la détection d'une tentative d'accès non autorisé, le module de sécurité 16 efface tout d'abord la clé primaire stockée dans la mémoire supplémentaire 32 puis, éventuellement, efface les données sensibles stockées dans la mémoire 14.

Dans le cas d'une interruption de l'alimentation principale VDD, le microprocesseur 12 cesse de fonctionner et le module de sécurité 16 continue à fonctionner en étant alimenté par la pile P. Le condensateur C2 est chargé par la tension d'alimentation de secours VDD_BU appliquée à la borne B4. La tension V_{Al} est alors égale à la tension d'alimentation de secours VDD_BU. La tension DIFF est alors sensiblement nulle. Dans le cas où la tension d'alimentation de secours VDD_BU varie, ce qui correspond, par exemple, à une désactivation de la pile P ou à une manipulation volontaire de la tension VDD_BU, la tension à la borne RAZ varie tandis que la tension V_{Al} à la borne Al est maintenue à une valeur sensiblement constante par le condensateur C2. L'augmentation en valeur absolue de la tension DIFF est détectée par le module de sécurité 16 comme une tentative d'accès non autorisé, par exemple lorsqu'elle est supérieure à un seuil déterminé pendant un nombre donné de cycles d'horloge. La tension d'alimentation de secours VDD_BU pouvant avoir diminué, le module de sécurité 16 est alors alimenté par le condensateur supplémentaire C2 jusqu'à ce que celui-ci soit déchargé. Une tentative d'accès non autorisé ayant été détectée, le module de sécurité 16 efface en premier lieu la clé primaire stockée dans la mémoire secondaire 32. Ensuite, si son alimentation est suffisante, le module de sécurité 16 cherche à effacer les données sensibles stockées dans la mémoire 14.

La taille de la mémoire supplémentaire 32 étant faible, l'opération d'effacement des données stockées dans la mémoire supplémentaire 32 peut être réalisée rapidement avec un faible coût énergétique. En particulier, elle peut être réalisée alors que le module de sécurité 16 est seulement alimenté par le condensateur C2. Par contre, selon la taille de la mémoire vive 14, la capacité du condensateur C2 peut ne pas être assez importante pour assurer une alimentation suffisante du module de sécurité 16 permettant l'effacement de la totalité des données sensibles stockées dans la mémoire 14. Toutefois, même si l'alimentation du module de sécurité 16 par le condensateur C2 est insuffisante pour permettre l'effacement de toutes les données sensibles stockées dans la mémoire 14 et même si la tension d'alimentation de secours VDD_BU est amenée à une valeur pour laquelle le fonctionnement du module de sécurité 16 est perturbé de sorte qu'il n'est alors plus en mesure d'effacer les données sensibles restantes stockées dans la mémoire 14, les données sensibles restantes stockées dans la mémoire 14 ne sont plus utilisables puisque la clé primaire stockée dans la mémoire supplémentaire 32 a été effacée. Les données sensibles restantes dans la mémoire 14 ne sont alors plus accessibles.

A titre d'exemple, la capacité du condensateur C2 peut être inférieure à quelques picofarads. Une telle capacité est suffisante pour assurer un courant d'alimentation du module de sécurité 16 de l'ordre de quelques centaines de nano-ampères pendant quelques cycles d'horloge. Ceci suffit à assurer le fonctionnement du module de sécurité 16 pendant les quelques cycles d'horloge nécessaires à la détection d'une tentative d'intrusion et à l'effacement de la mémoire supplémentaire 32. En particulier, lorsque la mémoire supplémentaire 32 correspond à un registre, l'effacement des données stockées dans la mémoire 32 peut être réalisé en un seul cycle d'horloge. Le condensateur C2 peut être réalisé de façon intégrée avec les autres éléments du module de sécurité 16. A titre d'exemple, le condensateur C2 peut correspondre aux capacités parasites de transistors MOS constituant le module de sécurité 16. En outre, le condensateur C2 assurant l'alimentation du module de sécurité 16, les contraintes de protection de la pile P, du condensateur C1 et de la liaison électrique entre la pile P, le condensateur C1 et la borne d'accès B4 peuvent être moins sévères que pour le circuit représenté en figure 1.

Des modes de réalisation particuliers de la présente invention ont été décrits. Diverses variantes et modifications apparaîtront à l'homme de l'art. En particulier, bien que la présente invention ait été décrite dans le cas d'un cryptoprocesseur relié à une source d'alimentation principale et à une source d'alimentation de secours, il est clair qu'elle peut s'appliquer à un cryptoprocesseur relié à une source d'alimentation unique, le condensateur supplémentaire intégré au cryptoprocesseur étant alors chargé par la source d'alimentation unique, et la tension fournie par la source d'alimentation unique étant comparée à la tension aux bornes du condensateur supplémentaire par le module de sécurité pour la détection d'une tentative d'accès non autorisé.

## Revendications

1. Circuit électronique (30) réalisé de façon intégrée, comprenant :
une première mémoire vive (14) de stockage de données ;
une seconde mémoire vive (32) dans laquelle est stockée une clé, lesdites données étant cryptées en mettant en oeuvre ladite clé ;
un module de traitement (16) adapté à réaliser une opération d'effacement de la première mémoire vive ; et
une borne d'accès (B4) reliée au module de traitement et destinée à recevoir un premier signal d'alimentation (VDD_BU) fourni par une première source d'alimentation (P, C1) externe au circuit électronique,
dans lequel une seconde source d'alimentation (C2) intégrée au circuit électronique est adaptée à fournir un second signal d'alimentation (VAl) au module de traitement, le module de traitement étant adapté à détecter qu'une tentative d'accès non autorisé a lieu à partir de la comparaison des premier et second signaux d'alimentation et à effacer ladite clé tandis que le module de traitement est alimenté par la seconde source d'alimentation,
dans lequel la seconde source d'alimentation comprend un élément capacitif (C2) relié à la borne d'accès (B4) et au module de traitement (16), le circuit électronique comprenant, en outre, un dispositif (R) adapté à empêcher une décharge rapide de l'élément capacitif par une action extérieure sur la borne d'accès,
**caractérisé en ce que** le module de traitement (16) comprend des transistors MOS et **en ce que** l'élément capacitif (C2) correspond aux capacités parasites des transistors MOS.

2. Circuit électronique selon la revendication 1, dans lequel la capacité de stockage de la seconde mémoire vive (32) est inférieure à la capacité de stockage de la première mémoire vive (14).

3. Circuit électronique selon l'une quelconque des revendications précédentes, dans lequel la capacité de stockage de la seconde mémoire vive (32) est inférieure à mille bits.

4. Circuit électronique selon l'une quelconque des revendications précédentes, comprenant une borne d'accès supplémentaire (B1) destinée à être reliée à une troisième source d'alimentation, externe au circuit électronique (30), assurant l'alimentation du module de traitement (16) dans un mode de fonctionnement normal du circuit électronique, la première source d'alimentation (P, C1) assurant l'alimentation du module de traitement lorsque la troisième source d'alimentation est inactive.

5. Circuit électronique selon l'une quelconque des revendications précédentes, dans lequel la première source d'alimentation comprend une pile (P) connectée à la borne d'accès (B4) et un condensateur (C1) monté en parallèle aux bornes de la pile.

6. Système, notamment lecteur de carte, comprenant un boîtier contenant une source d'alimentation (P, C1) et un circuit électronique (30) selon l'une quelconque des revendications 1 à 5 relié à la source d'alimentation.

7. Procédé de protection de données stockées dans une première mémoire vive (14) d'un circuit électronique (30), le circuit électronique comprenant, en outre, une seconde mémoire vive (32) au niveau du circuit électronique (30) dans laquelle est stockée une clé, lesdites données étant obtenues par un cryptage mettant en oeuvre ladite clé, un module de traitement (16) adapté à réaliser une opération d'effacement de la première mémoire vive et une borne d'accès (B4) reliée au module de traitement et destinée à recevoir un premier signal d'alimentation (VDD_BU) fourni par une première source d'alimentation (P, C1), externe au circuit électronique, dans lequel une seconde source d'alimentation (C2) intégrée au circuit électronique et adaptée à fournir un second signal d'alimentation (VAl) au module de traitement, le procédé consistant à amener le module de traitement à détecter qu'une tentative d'accès non autorisé a lieu à partir de la comparaison des premier et second signaux d'alimentation et à effacer ladite clé, le module de traitement étant alors alimenté par la seconde source d'alimentation, dans lequel la seconde source d'alimentation comprend un élément capacitif (C2) relié à la borne d'accès (B4) et au module de traitement (16), le circuit électronique comprenant, en outre, un dispositif (R) adapté à empêcher une décharge rapide de l'élément capacitif par une action extérieure sur la borne d'accès,
**caractérisé en ce que** le module de traitement (16) comprend des transistors MOS et **en ce que** l'élément capacitif (C2) correspond aux capacités parasites des transistors MOS.

8. Procédé selon la revendication 7, dans lequel le premier signal d'alimentation correspond à une première tension (VDD_BU) et dans lequel le second signal d'alimentation correspond à une seconde tension (VAl), une tentative d'accès non autorisé étant détectée lorsque la différence entre les seconde et première tensions est supérieure à un seuil donné pendant une durée donnée.

## Patentansprüche

1. Elektronische Schaltung (30), die in integrierter Form hergestellt ist, die Folgendes aufweist:
einen ersten Datenspeicherungs-Direktzugriffsspeicher bzw. -RAM (14);
einen zweiten RAM (32) in dem ein Schlüssel gespeichert ist, wobei die Daten durch Implementierung des Schlüssels verschlüsselt sind;
eine Verarbeitungseinheit (16), die konfiguriert ist, um einen Löschvorgang in dem ersten RAM auszuführen; und
einen Access-Terminal bzw. Zugangsanschluss (B4), der mit der Verarbeitungseinheit verbunden ist und ein erstes Leistungsliefersignal (VDD_BU) empfangen soll, das durch eine erste Leistungslieferquelle (P, C1) außerhalb der elektronischen Schaltung vorgesehen wird,
wobei eine zweite Stromlieferquelle (C2), die in die elektronische Schaltung integriert ist, konfiguriert ist, um ein zweites Stromliefersignal (VA1) an die Verarbeitungseinheit zu liefern, wobei die Verarbeitungseinheit konfiguriert ist, um zu detektieren, dass ein nicht autorisierter Zugriffsversuch auftritt, und zwar basierend auf dem Vergleich der ersten und zweiten Leistungsliefersignale und um den Schlüssel zu löschen, während die Verarbeitungseinheit durch die zweite Stromlieferquelle angetrieben wird,
wobei die zweite Stromlieferquelle ein kapazitives Element (C2) aufweist, das mit dem Zugangsanschluss (B4) und mit der Verarbeitungseinheit (16) verbunden ist, wobei die elektronische Schaltung ferner eine Vorrichtung (R) aufweist, die konfiguriert ist, um eine schnelle Entladung des kapazitiven Elements durch einen externen Vorgang des Zugangsanschlusses zu verhindern,
**dadurch gekennzeichnet, dass** die Verarbeitungseinheit (16) MOS-Transistoren aufweist, und dadurch, dass das kapazitive Element (C2) mit der Streukapazität der MOS-Transistoren übereinstimmt.

2. Elektronische Schaltung gemäß Anspruch 1, wobei die Speicherkapazität des zweiten RAM (32) kleiner als die Speicherkapazität des ersten RAM (14) ist.

3. Elektronische Schaltung gemäß einem der vorangehenden Ansprüche, wobei die Speicherkapazität des zweiten RAM (32) kleiner als ein tausend Bits ist.

4. Elektronische Schaltung gemäß einem der vorangehenden Ansprüche, die einen zusätzlichen Zugangsanschluss (B1) aufweist, der mit einer dritten Stromlieferquelle verbunden werden soll, die sich außerhalb der elektronischen Schaltung (30) befindet, die die Stromlieferung an die Verarbeitungseinheit (16) in einem normalen Betriebsmodus der elektronischen Schaltung sicherstellt, wobei die erste Stromlieferquelle (P, C1) die Stromlieferung der Verarbeitungseinheit sicherstellt, wenn die dritte Stromlieferquelle inaktiv ist.

5. Elektronische Schaltung gemäß einem der vorangehenden Ansprüche, wobei die erste Stromlieferquelle eine Zelle (P) aufweist, die mit dem Zugangsanschluss (B4) und einem Kondensator (C1), der parallel über die Zelle hinweg montiert ist, verbunden ist.

6. Ein System, insbesondere ein Kartenleser, der eine Einheit bzw. ein Gehäuse aufweist, das bzw. die eine Stromlieferquelle (P, C1) und die elektronische Schaltung (30) gemäß einem der Ansprüche 1 bis 5 aufweist, die mit der Stromlieferquelle verbunden sind.

7. Verfahren zum Schützen von Daten, die in einem ersten RAM (14) einer elektronischen Schaltung (30) gespeichert sind, wobei die elektronische Schaltung einen zweiten RAM (32) auf der Ebene der elektronischen Schaltung (30), in der ein Schlüssel gespeichert ist, wobei die Daten durch eine Verschlüsselung erhalten werden, die den Schlüssel implementiert, eine Verarbeitungseinheit (16), die konfiguriert ist, um einen Löschvorgang in dem ersten RAM auszuführen, und einen Zugangsanschluss (B4) aufweist, der mit der Verarbeitungseinheit verbunden ist und ein erstes Stromliefersignal (VDD_BU) empfangen soll, das durch eine erste Stromlieferquelle (P, C1) geliefert wird, die sich außerhalb der elektronischen Schaltung befindet, wobei eine zweite Stromlieferquelle (C2) in die elektronische Schaltung integriert und konfiguriert ist, um ein zweites Stromliefersignal (VA1) an die Verarbeitungseinheit zu liefern, wobei das Verfahren aufweist, dass die Verarbeitungseinheit veranlasst wird zu detektieren, dass ein nicht autorisierter Zugriffsversuch auftritt, und zwar basierend auf dem Vergleich der ersten und zweiten Stromliefersignale, und den Schlüssel zu löschen, wobei die Verarbeitungseinheit dann durch die zweite Stromlieferquelle angetrieben wird, wobei die zweite Stromlieferquelle ein kapazitives Element (C2) aufweist, das mit dem Zugangsanschluss (B4) und der Verarbeitungseinheit (16) verbunden ist, wobei die elektronische Schaltung ferner eine Einrichtung (R) aufweist, die konfiguriert ist, um eine schnelle Entladung des kapazitiven Elements durch eine externen Einwirkung auf den Zugangsanschluss zu verhindern,
**dadurch gekennzeichnet, dass** die Verarbeitungseinheit (16) MOS-Transistoren aufweist, und dadurch, dass das kapazitive Element (C2) mit den Streukapazitäten der MOS-Transistoren übereinstimmt.

8. Verfahren gemäß Anspruch 7, wobei das erste Stromliefersignal mit einer ersten Spannung (VDD_BU) übereinstimmt und wobei das zweite Stromliefersignal mit einer zweiten Spannung (VA1) übereinstimmt, wobei ein nicht autorisierter Zugriffsversuch detektiert wird, wenn die Differenz zwischen den zweiten und ersten Spannungen größer als ein gegebener Schwellenwert für eine gegebene Zeitperiode ist.

## Claims

1. An electronic circuit (30) made in integrated form, comprising:
a first data storage RAM (14);
a second RAM (32) in which a key is stored, said data being encrypted by implementation of said key;
a processing unit (16) configured to perform a deleting operation in the first RAM; and
an access terminal (B4) connected to the processing unit and intended to receive a first power supply signal (VDD_BU) provided by a first power supply source (P, C1) external to the electronic circuit,
wherein a second power supply source (C2) integrated to the electronic circuit is configured to provide a second power supply signal (VA1) to the processing unit, the processing unit being configured to detect that an unauthorized access attempt is occurring based on the comparison of the first and second power supply signals and to delete said key while the processing unit is powered by the second power supply source,
wherein the second power supply source comprises a capacitive element (C2) connected to the access terminal (B4) and to the processing unit (16), the electronic circuit further comprising a device (R) configured to prevent a fast discharge of the capacitive element by an external action on the access terminal,
**characterized in that** the processing unit (16) comprises MOS transistors and **in that** the capacitive element (C2) corresponds to the stray capacitances of the MOS transistors.

2. The electronic circuit of claim 1, wherein the storage capacity of the second RAM (32) is smaller than the storage capacity of the first RAM (14).

3. The electronic circuit of any of the preceding claims, wherein the storage capacity of the second RAM (32) is smaller than one thousand bits.

4. The electronic circuit of any of the preceding claims, comprising an additional access terminal (B1) intended to be connected to a third power supply source, external to the electronic circuit (30), ensuring the power supply of the processing unit (16) in a normal operating mode of the electronic circuit, the first power supply source (P, C1) ensuring the power supply of the processing unit when the third power supply source is inactive.

5. The electronic circuit of any of the preceding claims, wherein the first power supply source comprises a cell (P) connected to the access terminal (B4) and a capacitor (C1) assembled in parallel across the cell.

6. A system, especially a card reader, comprising a package containing a power supply source (P, C1) and the electronic circuit (30) of any of claims 1 to 5 connected to the power supply source.

7. A method for protecting data stored in a first RAM (14) of an electronic circuit (30), the electronic circuit comprising a second RAM (32) at the level of the electronic circuit (30) in which a key is stored, said data being obtained by an encryption implementing said key, a processing unit (16) configured to perform a delete operation in the first RAM and an access terminal (B4) connected to the processing unit and intended to receive a first power supply signal (VDD BU) delivered by a first power supply source (P, C1), external to the electronic circuit, wherein a second power supply source (C2) integrated to the electronic circuit and configured to provide a second power supply signal (VAl) to the processing unit and, the method comprising having the processing unit detect that an unauthorized access attempt is occurring based on the comparison of the first and second power supply signals and delete said key, the processing unit being then powered by the second power supply source, wherein the second power supply source comprises a capacitive element (C2) connected to the access terminal (B4) and to the processing unit (16), the electronic circuit further comprising a device (R) configured to prevent a fast discharge of the capacitive element by an external action on the access terminal,
**characterized in that** the processing unit (16) comprises MOS transistors and **in that** the capacitive element (C2) corresponds to the stray capacitances of the MOS transistors.

8. The method of claim 7, wherein the first power supply signal corresponds to a first voltage (VDD_BU) and wherein the second power supply signal corresponds to a second voltage (VAl), an unauthorized access attempt being detected when the difference between the second and first voltages is greater than a given threshold for a given time period.
